# EUROPÄISCHE PATENTSCHRIFT

(11) **EP 3 698 273 B1**
(45) Veröffentlichungstag und Bekanntmachung des Hinweises auf die Patenterteilung: **14.01.2026**
(21) Anmeldenummer: 18773366.2
(22) Anmeldetag: 11.09.2018
(51) Int. Cl.: G06V 10/98, G06V 20/58, G06F 18/25

(54) **VERFAHREN UND SYSTEM ZUM BETREIBEN EINES FAHRZEUGS**
METHOD AND SYSTEM FOR OPERATING A VEHICLE
PROCÉDÉ ET SYSTÈME POUR FAIRE FONCTIONNER UN VÉHICULE

(30) Priorität: 16.10.2017 DE 102017218438
(43) Veröffentlichungstag der Anmeldung: 26.08.2020
(73) Patentinhaber: Robert Bosch GmbH, 70442 Stuttgart (DE)
(72) Erfinder: ROSS, Hans-Leo, 64653 Lorsch (DE)
(86) Internationale Anmeldenummer: PCT/EP2018/074475
(87) Internationale Veröffentlichungsnummer: WO 2019/076542

(56) Entgegenhaltungen:
- CN-A- 104 802 793
- US-A1- 2008 036 576
- PULS STEPHAN ET AL: "Plausibility verification for situation awareness in safe human-robot cooperation", THE 23RD IEEE INTERNATIONAL SYMPOSIUM ON ROBOT AND HUMAN INTERACTIVE COMMUNICATION, IEEE, 25 August 2014 (2014-08-25), pages 601 - 606, XP032664712, ISBN: 978-1-4799-6763-6, [retrieved on 20141015], DOI: 10.1109/ROMAN.2014.6926318
- GHAHROUDI M R ET AL: "A Hybrid Method in Driver and Multisensor Data Fusion, Using a Fuzzy Logic Supervisor for Vehicle Intelligence", SENSOR TECHNOLOGIES AND APPLICATIONS, 2007. SENSORCOMM 2007. INTERNATIONAL CONFERENCE ON, IEEE, PISCATAWAY, NJ, USA, 14 October 2007 (2007-10-14), pages 393 - 398, XP031338549, ISBN: 978-0-7695-2988-2

## Beschreibung

Die vorliegende Erfindung betrifft ein Verfahren zum Betreiben eines Fahrzeugs. Die vorliegende Erfindung trifft weiterhin ein System zum Betreiben eines Fahrzeugs. Die vorliegende Erfindung betrifft weiterhin ein Computerprogrammprodukt.

### Stand der Technik

Technische Systeme, die Aufgaben von Menschen übernehmen, müssen nicht nur optische, akustische, manuelle, usw. Fertigkeiten des Menschen wenigstens gleichwertig ausführen, sondern müssen auch in der Lage sein, z.B. mögliche Fehlerreaktionen oder messprinzip-spezifische Irritationen, Anpassungen an Blendsituationen, Schattenbildungen, usw. wenigstens gleichwertig zu kompensieren.

Bekannte Umfelderkennungssysteme (Environmental Sensing) weisen viele technische Unzulänglichkeiten auf bzw. haben Grenzen, die Wirklichkeit in korrekten digitalen Daten abzubilden und weisen in der Regel auch im Hinblick auf externe Umfeld- und Infrastruktureinflüsse bedeutsame Mängel auf. Im Allgemeinen sind auf Radar, Laser, Kamera, usw. basierende Sensorsysteme rein technische Erfassungssysteme, die auf typische Anwendungsfälle, wie z.B. Fahrraumerkennung, Objekterkennung, usw. nur anhand von empirischen Erfahrungsstrukturen eingelernt, kalibriert, skaliert, usw. angepasst werden.

Bekannt sind auf Mikrorechnereinrichtungen basierte Voting-Systeme, die für spezielle Sicherheitsaufgaben entwickelt wurden. Derartige Systeme sind z.B. in der Luftfahrttechnik bekannt, wobei derartige Architekturen zumeist auf Geräteebene realisiert sind und für eine dreifach redundante Elektronik verwendet werden.

Bekannte Sicherheitssysteme basieren ausschließlich auf Diagnosen und Redundanzen, die in einem Vergleicher dann entsprechende Aktuatoren freigeben oder direkt ansteuern.

WO 201023242 A1 offenbart ein Drive-By-Wire System, welches mit Mehrheitsentscheidern ausgestattet ist, wobei die Mehrheitsentscheider Gleichungen verwenden, um ein Ausgangssignal zu generieren. Vorgesehen ist das System zur Steuerung von Fahrzeugkomponenten, insbesondere zur Lenkung eines Fahrzeugs nach dem Drive-By-Wire Prinzip, das im Falle eines sicherheitskritischen Fehlers in einer seiner Komponenten in einen betriebssicheren Zustand übergeht.

US 20150073630 A1 offenbart einen Controller für einen elektrischen Motor in einem elektrisch angetriebenen Fahrzeug. Der Controller verfügt unter anderem über ein Voting-Control-Modul und über ein Überbrückungsmodul, wobei das Voting-Control-Modul ein Fehlsignal von einem der beiden anderen Module erhält. Sobald beide Module ein Fehlersignal senden, generiert das Voting-Control-Modul einen Überbrückungsbefehl und leitete diesen an das Überbrückungsmodul weiter, welches den Befehl ausführt.

US 20050228546 A1 offenbart ein fehlertolerantes By-Wire-System für Fahrzeuge, das nach Fehlerkennung ein geklärtes Signal erzeugt, wobei Controller für ein bestimmtes geklärtes Signal voten.

US 2008/0036576 A1 offenbart ein Verfahren zum Fusionieren von Ferninfrarot- und sichtbaren Bilddaten bei der Hinderniserkennung in automotiven Anwendungen.

CN 104 802 793 A beschreibt ein Verfahren zum Klassifizieren eines Verhaltens eines Fußgängers beim Überqueren einer Fahrbahn.

Puls Stephan et al: "Plausibility Verification for Situation Awareness in Safe Human-Robot Cooperation" The 23rd IEEE International Symposium on robot and human interactive communication, IEEE, 25. August 2014 beschreibt ein System zur Plausibilitätsprüfung von Erkennungsergebnissen in der Mensch-Roboter-Kollaboration (MRK). Es verwendet ein Framework, das menschliche Handlungen, Objekte und deren Positionen im Arbeitsbereich erkennt und anhand von Regeln auf Inkonsistenzen prüft. Die Risikobewertung für die Roboterbewegung wird basierend auf den Ergebnissen der Plausibilitätsprüfung angepasst, um die Sicherheit zu erhöhen.

Ghahroudi R et al: "A Hybrid Method in Driver and Multisensor Data Fusion, Using a Fuzzy Logic Supervisor for Vehicle Intelligence", Sensor Technologies and Applications, 2007 beschreibt einen hybriden Ansatz zur Datenfusion, der Sensordaten des Fahrzeugs mit den Wahrnehmungen des Fahrers kombiniert. Ein Fuzzy-Logic-Supervisor (FLS) agiert als Steuerungsalgorithmus, der die gesammelten Daten fusioniert und das Fahrzeug lenkt, wobei der Fahrer weiterhin die Kontrolle behält, aber durch das System unterstützt wird.

### Offenbarung der Erfindung

Eine Aufgabe der vorliegenden Erfindung ist es, ein verbessertes System zum Betreiben eines Fahrzeugs bereit zu stellen.

Die Aufgabe wird gemäß einem ersten Aspekt gelöst mit einem Verfahren zum Betreiben eines Fahrzeugs, wobei eine Sensorvorrichtung wenigstens zwei technologisch diversifizierte Sensoreinrichtungen aufweist, aufweisend die Schritte:
- Erfassen von Umfeldinformationen mittels der Sensorvorrichtung;
- Definiertes Auswerten der von den technologisch diversifizierten Sensoreinrichtungen erfassten Umfeldinformationen hinsichtlich Plausibilität; und
- Definiertes Verwenden der Umfeldinformationen unter Verwendung eines Resultats des definierten Auswertens der erfassen Umfeldinformationen.

Auf diese Weise wird ein Verfahren bereitgestellt, bei dem Informationen vom Sensor auf Korrektheit und/oder Brauchbarkeit überprüft und danach verwendet werden, wobei die Tatsache ausgenützt wird, dass eine Entscheidungseinrichtung ("Voter") logikbasiert und nicht empirisch arbeitet. Erfindungsgemäß kommt der genannte Voter an einer Stelle zum Einsatz, an der er nicht mehr direkt mit den eigentlichen Sensordaten befasst ist. Im Allgemeinen hat man bei drei Pfaden zwei homogene Pfade (d.h. mit gleicher Funktionalität oder systemischer Gleichheit) und einen diversitären Pfad. Dadurch kann man durch den Vergleich der Homogenität zufällige Fehler gut entdecken und durch die Diversität systematische Fehler beherrschen oder tolerieren.

Gemäß einem zweiten Aspekt wird die Aufgabe gelöst mit einem System zum Betreiben eines Fahrzeugs; aufweisend:
- wenigstens zwei technologisch diversifizierte Sensoreinrichtungen zum Erfassen von Umfeldinformationen des Fahrzeugs;
- eine Auswerteeinrichtung zum definierten Auswerten der von den technologisch diversifizierten Sensoreinrichtungen erfassten Umfeldinformationen hinsichtlich Plausibilität; und
- eine Entscheidungseinrichtung zum definierten Verwenden der Umfeldinformationen unter Verwendung eines Resultats des definierten Auswertens der erfassen Umfeldinformationen.

Vorteilhafte Weiterbildungen des Verfahrens sind Gegenstand von abhängigen Ansprüchen.

Eine vorteilhafte Weiterbildung des Verfahrens sieht vor, dass mittels der Sensorvorrichtung ein Fahrraum des Fahrzeugs erfasst und ausgewertet wird. Auf diese Weise kann vorteilhaft erkannt werden, ob sich Objekte im kritischen Fahrraum des Fahrzeugs befinden, wodurch eine Fahrcharakteristik für das Fahrzeug sicherer ausgestaltet werden kann.

Eine weitere vorteilhafte Weiterbildung des Verfahrens sieht vor, dass ein Plausibilisieren eines Vorhandenseins eines Objekts in einem Umfeld des Fahrzeugs durchgeführt wird. Dadurch ist unterstützt, dass ein Erfassungsbereich im Umfeld des Fahrzeugs verbessert erfasst wird und dadurch ein Fahrverhalten des Fahrzeugs verbessert ausgestaltet ist.

Eine weitere vorteilhafte Weiterbildung des Verfahrens sieht vor, dass das definierte Auswerten der technologisch diversifizierten Sensoreinrichtungen redundant durchgeführt wird. Dadurch kann eine Sicherheitsstufe für das System noch weiter verbessert werden.

Eine weitere vorteilhafte Weiterbildung des Verfahrens sieht vor, dass zum definierten Auswerten der technologisch diversifizierten Sensoreinrichtungen der Fahrraum in geometrischer Hinsicht virtuell partitioniert wird. Darüber kann vorteilhaft ein Fahrraum im Umfeld des Fahrzeugs nach geeigneten Prinzipien unterteilt und an spezifische Erfordernisse angepasst werden. Eine Betriebscharakteristik des Systems kann dadurch noch weiter verbessert sein.

Eine weitere vorteilhafte Weiterbildung des Verfahrens sieht vor, dass beim definierten Auswerten der von den technologisch diversifizierten

Sensoreinrichtungen erfassten Umfeldinformationen hinsichtlich Plausibilität Auswertealgorithmen definiert gegeneinander abgearbeitet werden. Dadurch ist eine effiziente Prüfung der von den Sensoreinrichtungen bereitgestellten Daten unterstützt.

Weitere vorteilhafte Weiterbildungen des Verfahrens sehen vor, dass die technologisch diversifizierten Sensoreinrichtungen eine unscharfe Logik, und/oder nicht deterministische Systeme und/oder nicht deterministische Algorithmen, und/oder sporadisch fehlerbehaftete Systeme umfassen. Dadurch sind vorteilhaft vielfache Varianten zur Ausbildung der Sensoreinrichtungen möglich.

Die Erfindung wird im Folgenden mit weiteren Merkmalen und Vorteilen anhand von mehreren Figuren detailliert beschrieben. Die Figuren sind vor allem dazu gedacht, die erfindungswesentlichen Prinzipien zu verdeutlichen und sind nicht unbedingt maßstabgetreu ausgeführt.

Offenbarte Verfahrensmerkmale ergeben sich analog aus entsprechenden offenbarten Vorrichtungsmerkmalen und umgekehrt. Dies bedeutet insbesondere, dass sich Merkmale, technische Vorteile und Ausführungen betreffend das Verfahren in analoger Weise aus entsprechenden Ausführungen, Merkmalen und Vorteilen betreffend das System ergeben und umgekehrt.

In den Figuren zeigt:
- Fig. 1: eine Übersichtsbild mit einer prinzipiellen Darstellung einer Funktionsweise des erfindungsgemäßen Verfahrens;
- Fig. 2: eine prinzipielle Darstellung einer Ausführungsform eines vorgeschlagenen Systems zum Betreiben eines Fahrzeugs;
- Fig. 3: eine Darstellung einer Funktionsweise einer Ausführungsform des vorgeschlagenen Systems; und
- Fig. 4: eine prinzipielle Darstellung eines vorgeschlagenen Verfahrens zum Betreiben eines Fahrzeugs.

### Beschreibung von Ausführungsformen

Im Folgenden wird der Begriff "automatisiertes Fahrzeug" synonym in den Bedeutungen vollautomatisiertes Fahrzeug, teilautomatisiertes Fahrzeug, vollautonomes Fahrzeug und teilautonomes Fahrzeug verwendet.

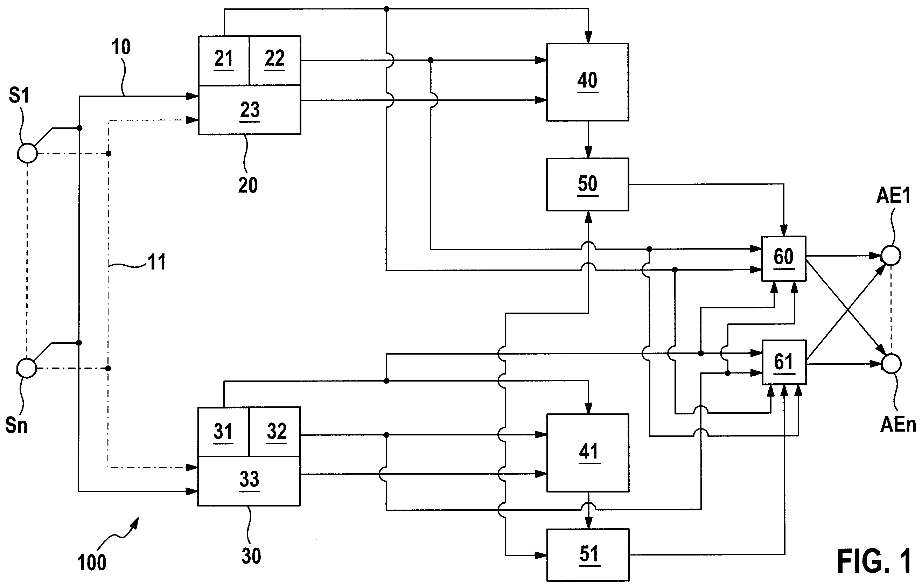

Fig. 1 zeigt ein Übersichtsbild einer Ausführungsform eines vorgeschlagenen Systems 100 zum Betreiben eines Fahrzeugs (nicht dargestellt). Das Fahrzeug kann zur Durchführung des vorgeschlagenen Verfahrens ein fahrzeuggebundenes Umfelderfassungssystem (engl. Onboard-Perception), wie z.B. eine Video- und/oder Lidar- und/oder Radar- und/oder Ultraschallsensorik zur Erfassung von Umfeldinformationen des Fahrzeugs aufweisen. Ferner kann das genannte Umfelderfassungssystem wenigstens teilweise auch in einer Infrastruktur im Umfeld des Fahrzeugs angeordnet sein.

Man erkennt Sensoreinrichtungen S1...Sn, z.B. in Form von Radar, Lidar, Kamera usw. Mittels einer ersten Datenleitung 10 werden die Daten der genannten Sensoreinrichtungen S1...Sn an eine erste Logikeinrichtung 20 zugeführt. Die erste Logikeinrichtung 20 umfasst Berechnungselemente 21, 22 und ein Diagnoseelement 23 zum Verarbeiten der zugeführten Daten. Über eine zweite Datenleitung 11 werden die genannten Daten der Sensoreinrichtungen S1...Sn an eine zweite Logikeinrichtung 30 zugeführt, wobei die zweite Logikeinrichtung 30 Berechnungselemente 31, 32 und ein Diagnoseelement 33 zum Verarbeiten der zugeführten Daten umfasst.

Von der genannten ersten Logikeinrichtung 20 werden die Daten an eine erste Diagnoseeinrichtung 40 zugeführt, die funktional mit einer ersten Vergleichseinrichtung 50 verbunden ist. Mittels der Diagnoseeinrichtung 40 werden die Daten der Sensoreinrichtungen S1...Sn z.B. auf Plausibilität hin überprüft. Die erste Vergleichseinrichtung 50 ist funktional mit einer zweiten Vergleichseinrichtung 51 verbunden, wobei die erste Vergleichseinrichtung 50 Funktionen realisiert, die Ergebnisse der zwei redundante Pfade vergleicht und somit einen Kreuzvergleich mit einer zweiten Vergleichseinrichtung 51 vor dem Eingang der ersten Entscheidungseinrichtung 60 realisiert. Die erste Entscheidungseinrichtung 60 übernimmt im Ergebnis lediglich eine entsprechende Ansteuerung von Aktuatoren AE1...AEn.

Die Verarbeitung der Daten der Sensoreinrichtungen S1... Sn, die mittels der zweiten Datenleitung 11 ausgelesen werden, erfolgt analog wie oben erläutert mittels der zweiten Logikeinrichtung 30, der zweiten Diagnoseeinrichtung 41 und der zweiten Vergleichseinrichtung 51.

Man erkennt also, dass die Entscheidungseinrichtungen 60, 61 am Ende der Kette der Signalverarbeitung angeordnet sind und auf diese Weise eine Überprüfung, Auswertung und Analyse der Sensordaten hinsichtlich Plausibilität erfolgt. Auf diese Weise sind die Entscheidungseinrichtungen 60, 61 im System 100 nicht mehr mit einer Verarbeitung der "echten" Sensordaten befasst. Im Ergebnis ist dadurch eine Fehlerfreiheit der Sensordaten weitestgehend ausgeschlossen, wodurch vom System 100 angesteuerte Assistenzsysteme des Fahrzeugs zuverlässiger operieren können.

Die Auswahl bezüglich Überprüfung der Sensordaten auf Korrektheit wird mittels einer Logikstruktur mit den Logikeinrichtungen 20,30, den Diagnoseeinrichtungen 40,41 und den Vergleichseinrichtungen 50, 51 durchgeführt.

Die zwei technologisch diversifizierten Sensoreinrichtungen können auch als zwei verschiedenartige Algorithmen auf Basis neuronaler Netze, und/oder als eine unscharfe Logik, und/oder als nicht deterministische Systeme und/oder als sporadisch fehlerbehaftete Systeme ausgebildet sein.

Auf diese Weise können mittels des Systems 100 die Sensordaten der Sensoreinrichtungen S1...Sn effizient überprüft werden, wodurch eine Fehlerfreiheit des gesamten Systems 100 vorteilhaft unterstützt ist. Im Ergebnis kann dadurch ein mit dem System 100 angesteuertes automatisiertes Fahrzeug sicherer betrieben werden.

Im Ergebnis wird mit dem System 100 von Fig. 1 ein redundanter 2-aus-4-Voter realisiert, wobei definierte Bedingungen, Diagnosen, Integritäten und Zustände als Eingang für die Voter-Konfiguration genutzt werden. Wenn zum Beispiel eine als Kamera ausgebildete Sensoreinrichtung S1...Sn grauen Asphalt erkennt, wird daraus der Schluss gezogen, dass kein Hindernis zwischen der Straße und dem Fahrzeug vorhanden ist. Ein gemäß Stand der Technik diversitärer Ansatz wäre in diesem Fall, dass erkannt wird, dass keine Objekte im Fahrbereich des Fahrzeugs vorhanden sind.

Man erkennt also, dass im vorgeschlagenen System 100 Daten der gesamten Sensorik weitgehend unabhängig voneinander in redundante Auswertesysteme eingelesen werden. Auf diese Weise können zufällige Hardware- und/oder auch systematische Fehler der Sensorik weitgehend ausgeschlossen werden, da eine Gleichzeitigkeit der genannten Fehler als ein Kriterium für die Unwahrscheinlichkeit genutzt werden kann. Beispielsweise wirkt sich ein EMV-Problem nicht gleichzeitig auf zwei verschiedene Signale mit demselben Effekt zur gleichen Zeit aus.

Die Sensorfusion und auch die Informationsgewinnung zum Beispiel durch Auswertealgorithmen (Objektverfolgung, Bilderkennung, neuronale Netze, Modelle, Simulationen, indirekte Messungen, usw.) werden auf diese Weise auf physikalisch unterschiedlichen elektronisch/elektrischen Systemen redundant ausgeführt, wobei durch einen Vergleich von Ergebnissen der Redundanz vorteilhaft zufällige Hardwarefehler entdeckt werden und nicht in die Auswertetätigkeit des Systems 100 übernommen werden.

Sollte das System 100 sichere Anforderungen betreffend Verfügbarkeit haben (z.B. Lenkung beim hochautomatisierten Fahren), sollte die Ansteuerung der Aktuatoren AE1...AEn vorzugsweise über redundante Entscheidungseinrichtungen 60, 61 erfolgen, die eine Synchronisierungs- und Gleichzeitigkeitsanalyse durchführen. Wesentlich ist dabei, dass die redundanten Strecken keine Beeinflussung bis hin zu den Entscheidungseinrichtungen 60, 61 erfahren, damit Fehler nicht entlang der Wirkkette doch noch zu sogenannten unerwünschten Common-Cause-Effekten führen.

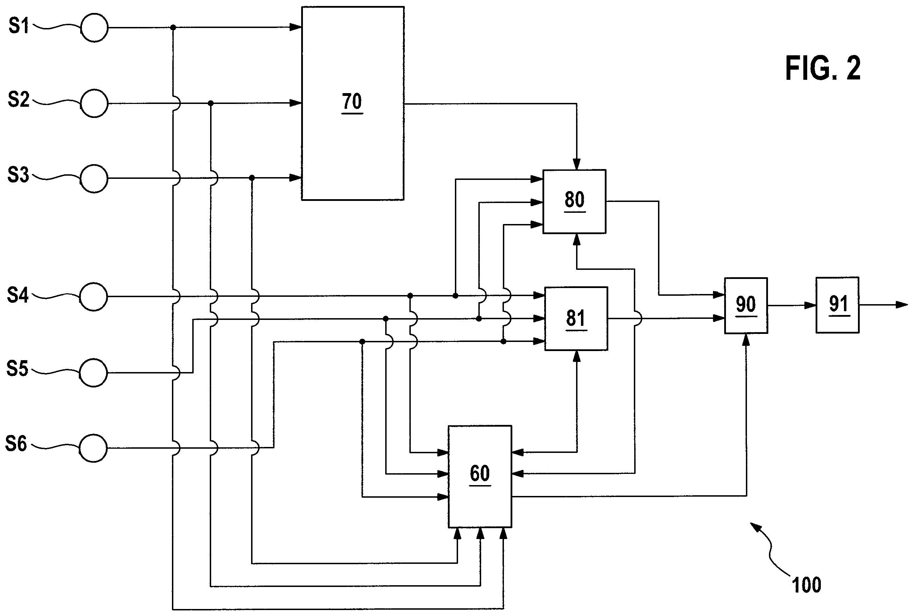

Fig. 2 zeigt lediglich beispielhaft eine technische Implementierungsmöglichkeit für das in Fig. 1 gezeigte System 100.

Man erkennt die Sensoreinrichtungen S1-S3 in Form von Kameras sowie Sensoreinrichtungen S4-S6 in Form von Lidarsensoren. Dadurch umfasst die Sensorvorrichtung S1...Sn wenigstens zwei technologisch diversifizierte Sensoreinrichtungen. Die Sensoreinrichtungen S1..S3 übermitteln ihre Daten an einen Kameraserver 70 und an die erste Entscheidungseinrichtung 60. Die Sensoreinrichtungen S4...S6 übermitteln ihre Daten an beispielsweise in einem Parkhaus angeordnete Gebäudeserver 80, 81 und an die erste Entscheidungseinrichtung 60. Dabei realisieren die Gebäudeserver 80, 81 die Funktionalitäten der in Fig. 1 gezeigten Logikeinrichtungen 20,30, Diagnoseeinrichtungen 40, 41 und Vergleichseinrichtungen 50, 51.

Beim definierten Auswerten der von den technologisch diversifizierten Sensoreinrichtungen erfassten Umfeldinformationen hinsichtlich Plausibilität können Auswertealgorithmen definiert gegeneinander abgearbeitet werden, wodurch eine Gegenprüfung von Plausibilitäten von Sensordaten ermöglicht ist.

Die Gebäudeserver 80, 81 werten die Daten des Kameraservers 70 und der Sensoreinrichtungen S4...S6 aus und übermitteln ihre Ergebnisdaten an eine Sendeeinrichtung 90. Die Sendeeinrichtung 90 erhält von der ersten Entscheidungseinrichtung 60 ein Freigabesignal in Form eines validen Schlüssels, woraufhin die Sendeeinrichtung 90 die Daten an eine Steuereinrichtung 91 weiterleitet. Die Sendeeinrichtung 90 kann mit der Steuereinrichtung 91 z.B. über eine Drahtlosverbindung (z.B. Funkverbindung) funktional verbunden sein.

Mittels der Entscheidungseinrichtung 60 ist es also möglich, die Datenströme der Sendeeinrichtung 90 definiert freizugeben oder zu blockieren. An der Verarbeitung der Dateninformationen der Sensoreinrichtungen ist die Entscheidungseinrichtung 60 nur mehr teilweise beteiligt und hat z.B. keine Kenntnis über die Bildinformationen der Sensoreinrichtungen S1... S3.

Die Steuereinrichtung 91 fungiert im Ergebnis somit als eine Art Totmannschalter, der aktiv bleibt, wenn ein valider Schlüssel von der Entscheidungseinrichtung 60 an die Sendeeinrichtung 90 übermittelt wird. Dies kann z.B. in definierten Zeitintervallen (z.B. alle 100 ms) erfolgen, wobei im Falle eines Nichtübermittelns des Schlüssels das Fahrzeug über Aktuatoren AE1...AEn mittels der Steuereinrichtung 91 in einen sicheren Zustand versetzt, z.B. abgebremst und/oder definiert gelenkt wird.

Im Ergebnis wird mit dem System 100 von Fig. 1 und Fig. 2 ein bedingter Voter realisiert, der definiert konfiguriert werden, auf Basis unterschiedlichster Parameter verschiedene Datenströme auswerten und somit anhand von unterschiedlichen Faktoren die Aktuatoren AE1...AEn sicher ansteuern kann.

Solche Faktoren können von definierten Zuständen abhängig sein, wie zum Beispiel:
- Betriebszustände des Fahrzeugs (z.B. Fahrzeug beschleunigt, bremst, usw.)
- Systemzustände (z.B. Steuergeräte sind in einer Initialisierungsphase, Rekonfiguration, defekt, usw.)
- Verkehrssituationen (z.B. Autobahnfahrt, belebte Straße, urbanes Umfeld, usw.)

Insbesondere bei der Umfeldsensorik können die Systeme bei möglichen technischen Unzulänglichkeiten auf bessere Systeme oder Auswertealgorithmen umgeschaltet werden. Damit werden neben den technischen Unzulänglichkeiten der Sensoren und Auswertealgorithmen auch mögliche Fehlerauswirkungen aus dem Umfeld anpassbar, wie zum Beispiel:
- Temperatur, Schmutz, usw. verfälschen die Messergebnisse
- Regen, Schnee, Nebel, usw. schränken die Erkennungsfähigkeit ein
- Elektrische Fehler und Toleranzen (z.B. Bauteilrauschen, EMV, usw.) verfälschen das Ergebnis der Sensordaten

Die technischen Systeme können zeitlich variabel kalibriert oder konfiguriert werden, sodass der Voter für den Zeitraum die Ergebnisse dieser technischen Elemente ausblendet.

Somit können die Erkennungs- oder Detektionsalgorithmen (bei Lidar auf einem mechanischen Drehen des Emitters basierend), Kompensationsalgorithmen, usw. an die unterschiedlichen Datenlaufzeiten der Systeme angepasst werden.

In einer weiteren Variante kann auch ein priorisiertes Voting durchgeführt werden, wobei in diesem Fall eine Sensoreinrichtung, die für die jeweilige Situation, Zustand, Situation, usw. am besten geeignet ist, höher priorisiert wird und die Informationen mit der höchsten Priorität dann im Voter betrachtet werden. Dadurch kann man sehr gut mit unscharfer Logik (z.B. neuronale Netze) oder nicht-deterministischen Meßprinzipien arbeiten. Dies bedeutet einen wesentlichen Vorteil für die Absicherung von neuronalen Netzen.

Ein wesentlicher Vorteil des vorgeschlagenen Systems 100 beruht darauf, dass der Sicherheitsnachweis nicht mehr auf der Fehlerintegrität des Trägersystems (inklusive Sensoren) beruht, sondern nur noch auf einem möglichen Einfluss auf die Sicherheit des Fahrzeugs. Somit werden nur die Diagnose, Vergleicher und die Voter sowie die Aktuatoransteuerung nach Sicherheitsanforderungen implementiert. Die diversitären Funktionen unterliegen nur der Analyse für Fehler gemeinsamer Ursachen und sind im Verkehr als implementierter Sicherheitsmechanismus nicht mehr notwendig.

Somit kann auch mit ungewöhnlichen Einflüssen umgegangen werden, da diese als ungewöhnlich erkannt werden (es gibt Kombinatoriken, die nicht logisch sind) und zum Beispiel wird das Fahrzeug dann entsprechend degradiert (zum Beispiel abgebremst, auf eine andere Strecke geführt, usw.)

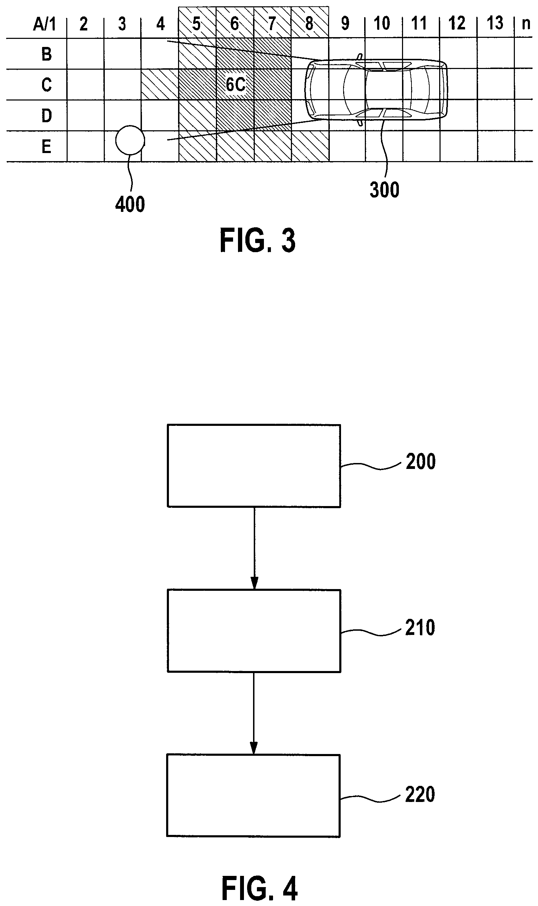

Fig. 3 zeigt eine Darstellung einer Funktionsweise des vorgeschlagenen Verfahrens in einem AVP-Umfeld (Automated Valet Parking), bei dem ein automatisiertes Fahrzeug 300 in einem Parkraum fremdgeführt wird. Erkennbar ist, dass ein Fahrbereich vor dem Fahrzeug 300 in virtuelle geometrische Flächen in Form von Quadraten aufgeteilt ist. Angedeutet ist ein Quadrat 6C, das mittels des vorgeschlagenen Systems 100 als frei befahrbar erkannt wird. Im Ergebnis wird eine Skalierung der Voter-Struktur auf einen virtuellen Raum realisiert, der einem Schachbrett entspricht.

Insbesondere kommen Vorteile des vorgeschlagenen Verfahrens bei automatisierten Fahrfunktionen im allgemeinen Straßenverkehr zur Geltung, weil hier die Komplexität aus Umfeld, Unzulänglichkeiten, Fehler, Zuständen etc. noch viel größer als im AVP-Umfeld ist.

Eine nicht in Figuren dargestellte Erweiterung der Schachbrettanalyse von Fig. 3 kann vorsehen, dass auch eine Höheninformation des Bereichs vor dem Fahrzeug 300 berücksichtigt wird, wodurch weitere plausible Daten generiert werden und man noch genauere Entscheidungen mittels der Entscheidungseinrichtungen erreichen kann, die unter Berücksichtigung der Höheninformationen generiert werden.

Dabei kann z.B. vorgesehen sein, dass der virtuelle Bereich im Umfeld des Fahrzeugs 300 in drei Höhenstufen unterteilt ist. Auf diese Weise wird mittels des Systems 100 wiederum der Bereich 6C als frei befahrbar erkannt, wobei in diesem Fall jeweils ein Lidarsensor in drei verschiedenen Höhenstufen am Fahrzeug 300 angeordnet sein kann und einen befahrbaren Bereich vor dem Fahrzeug 300 sensiert. Der besseren Übersicht halber sind die einzelnen Einrichtungen und Elemente des Systems 100 in Fig. 3 nicht dargestellt.

Fig. 4 zeigt einen prinzipiellen Ablauf einer Ausführungsform des vorgeschlagenen Verfahrens.

In einem Schritt 200 wird ein Erfassen von Umfeldinformationen mittels der Sensorvorrichtung S1...Sn durchgeführt.

In einem Schritt 210 wird ein definiertes Auswerten der von den technologisch diversifizierten Sensoreinrichtungen erfassten Umfeldinformationen hinsichtlich Plausibilität durchgeführt.

In einem Schritt 220 wird ein definiertes Verwenden der Umfeldinformationen unter Verwendung eines Resultats des definierten Auswertens der erfassen Umfeldinformationen durchgeführt.

Vorteilhat kann das vorgeschlagene Verfahren für einen HAF Level 5 Betrieb (engl. Highly Automated Driving) des Fahrzeugs verwendet werden, in welche der Fahrer nicht mehr in das Fahrgeschehen eingreift.

Vorteilhaft kann das vorgeschlagene Verfahren in Form eines Softwareprogramms mit geeigneten Programmcodemitteln realisiert werden, die auf dem System 100 zum Betreiben eines Fahrzeugs abläuft. Eine einfache Adaptierbarkeit des Verfahrens ist auf diese Weise möglich.

Der Fachmann wird die Merkmale der Erfindung in geeigneter Weise abändern und/oder miteinander kombinieren, ohne vom Kern der Erfindung abzuweichen.

## Patentansprüche

1. Verfahren zum Betreiben eines Fahrzeugs (300), wobei eine Sensorvorrichtung (S1...Sn) wenigstens zwei technologisch diversifizierte Sensoreinrichtungen aufweist, aufweisend die Schritte:
- Erfassen von Umfeldinformationen mittels der Sensorvorrichtung (S1...Sn);
- Definiertes Auswerten der von den technologisch diversifizierten Sensoreinrichtungen erfassten Umfeldinformationen hinsichtlich Plausibilität, wobei
- Daten der Sensoreinrichtungen (S1...Sn) einer ersten Logikeinrichtung (20) zugeführt werden und einer zweiten Logikeinrichtung (30) zugeführt werden und wobei
- von der ersten Logikeinrichtung (20) die Daten an eine erste Diagnoseeinrichtung (40) zugeführt werden, die funktional mit einer ersten Vergleichseinrichtung (50) verbunden ist, wobei mittels der Diagnoseeinrichtung (40) die Daten auf Plausibilität überprüft werden, und
- Daten der Sensoreinrichtungen (S1...Sn) mittels einer zweiten Logikeinrichtung (30), einer zweiten Diagnoseeinrichtung (41) und einer zweiten Vergleichseinrichtung (51) auf Plausibilität geprüft werden, wobei
- die erste Vergleichseinrichtung (50) funktional mit der zweiten Vergleichseinrichtung (51) verbunden ist und wobei die erste Vergleichseinrichtung (50) einen Kreuzvergleich mit der zweiten Vergleichseinrichtung (51) ausführt,
- ; und
- Definiertes Verwenden der Umfeldinformationen unter Verwendung eines Resultats des definierten Auswertens der erfassen Umfeldinformationen,
wobei eine Auswahl bezüglich Überprüfung der Daten auf Korrektheit mittels den Logikeinrichtungen (20,30), den Diagnoseeinrichtungen (40,41) und den Vergleichseinrichtungen (50, 51) durchgeführt wird, derart, dass ein redundanter 2-aus-4-Voter realisiert ist, wobei definierte Bedingungen, Diagnosen, Integritäten und Zustände als Eingang für die Voter-Konfiguration genutzt werden.

2. Verfahren nach Anspruch 1, wobei mittels der Sensorvorrichtung (S1...Sn) ein Fahrraum des Fahrzeugs (300) erfasst und ausgewertet wird.

3. Verfahren nach Anspruch 1 oder 2, wobei ein Plausibilisieren eines Vorhandenseines eines Objekts in einem Umfeld des Fahrzeugs (300) durchgeführt wird.

4. Verfahren nach einem der Ansprüche 1 bis 3, wobei das definierte Auswerten der technologisch diversifizierten Sensoreinrichtungen redundant durchgeführt wird.

5. Verfahren nach Anspruch 4, wobei zum definierten Auswerten der technologisch diversifizierten Sensoreinrichtungen der Fahrraum in geometrischer Hinsicht virtuell partitioniert wird.

6. Verfahren nach einem der vorhergehenden Ansprüche, wobei beim definierten Auswerten der von den technologisch diversifizierten Sensoreinrichtungen erfassten Umfeldinformationen hinsichtlich Plausibilität Auswertealgorithmen definiert gegeneinander abgearbeitet werden.

7. Verfahren nach einem der vorhergehenden Ansprüche, wobei die technologisch diversifizierten Sensoreinrichtungen eine unscharfe Logik, und/oder nicht deterministische Systeme und/oder nicht deterministische Algorithmen, und/oder sporadisch fehlerbehaftete Systeme umfassen.

8. Verwendung eines Verfahrens nach einem der vorhergehenden Ansprüche beim automatisierten Parken und/oder im urbanen Umfeld.

9. System (100) zum Betreiben eines Fahrzeugs (300), aufweisend:
- wenigstens zwei technologisch diversifizierte Sensoreinrichtungen zum Erfassen von Umfeldinformationen des Fahrzeugs (300);
- eine Auswerteeinrichtung (20, 30, 40, 50) zum definierten Auswerten der von den technologisch diversifizierten Sensoreinrichtungen erfassten Umfeldinformationen hinsichtlich Plausibilität, wobei Daten der Sensoreinrichtungen (S1...Sn) einer ersten Logikeinrichtung (20) zugeführt werden und einer zweiten Logikeinrichtung (30) zugeführt wer den und wobei
- von der ersten Logikeinrichtung (20) die Daten an eine erste Diagnoseeinrichtung (40) zugeführt werden, die funktional mit einer ersten Vergleichseinrichtung (50) verbunden ist, wobei mittels der Diagnoseeinrichtung (40) die Daten auf Plausibilität überprüft werden, und
- Daten der Sensoreinrichtungen (S1...Sn) mittels einer zweiten Logikeinrichtung (30), einer zweiten Diagnoseeinrichtung (41) und einer zweiten Vergleichseinrichtung (51) auf Plausibilität geprüft werden, wobei
- die erste Vergleichseinrichtung (50) funktional mit der zweiten Vergleichseinrichtung (51) verbunden ist und wobei die erste Vergleichseinrichtung (50) einen Kreuzvergleich mit der zweiten Vergleichseinrichtung (51) ausführt,
- und eine Entscheidungseinrichtung (60, 61) zum definierten Verwenden der Umfeldinformationen unter Verwendung eines Resultats des definierten Auswertens der erfassen Umfeldinformationen, wobei eine Auswahl bezüglich Überprüfung der Daten auf Korrektheit mittels den Logikeinrichtungen (20,30), den Diagnoseeinrichtungen (40,41) und den Vergleichseinrichtungen (50, 51) durchgeführt wird, derart dass ein redundanter 2-aus-4-Voter realisiert ist, wobei definierte Bedingungen, Diagnosen, Integritäten und Zustände als Eingang für die Voter-Konfiguration genutzt werden.

10. Computerprogrammprodukt mit Programmcodemitteln eingerichtet zur Durchführung des Verfahrens nach einem der Ansprüche 1 bis 7, wenn es auf einem System (100) zum Betreiben eines Fahrzeugs abläuft oder auf einem computerlesbaren Datenträger gespeichert ist.

## Claims

1. Method for operating a vehicle (300), wherein a sensor apparatus (S1... Sn) comprises at least two technologically diversified sensor devices, comprising the steps of:
- capturing environmental information by means of the sensor apparatus (S1...Sn);
- evaluating the environmental information captured by the technologically diversified sensor devices in a defined manner with regard to plausibility, wherein
- data from the sensor devices (S1...Sn) are fed to a first logic device (20) and fed to a second logic device (30), and wherein
- the data are fed from the first logic device (20) to a first diagnostic device (40) which is functionally connected to a first comparison device (50), wherein the data are checked for plausibility by means of the diagnostic device (40), and
- data from the sensor devices (S1...Sn) are checked for plausibility by means of a second logic device (30), a second diagnostic device (41) and a second comparison device (51), wherein
- the first comparison device (50) is functionally connected to the second comparison device (51), and wherein the first comparison device (50) carries out a cross-comparison with the second comparison device (51),
- ; and
- using the environmental information in a defined manner using a result of the defined evaluation of the captured environmental information, wherein a selection with regard to checking the data for correctness is carried out by means of the logic devices (20, 30), the diagnostic devices (40, 41) and the comparison devices (50, 51) such that a redundant 2-out-of-4-voter is implemented, wherein defined conditions, diagnoses, integrities and states are used as the input for the voter configuration.

2. Method according to Claim 1, wherein a driving space of the vehicle (300) is captured and evaluated by means of the sensor apparatus (S1...Sn).

3. Method according to Claim 1 or 2, wherein a plausibility check of a presence of an object in an environment of the vehicle (300) is carried out.

4. Method according to one of Claims 1 to 3, wherein the defined evaluation of the technologically diversified sensor devices is carried out redundantly.

5. Method according to Claim 4, wherein, for the defined evaluation of the technologically diversified sensor devices, the driving space is partitioned virtually in geometrical terms.

6. Method according to one of the preceding claims, wherein, during the defined evaluation of the environmental information captured by the technologically diversified sensor devices with regard to plausibility, evaluation algorithms are executed in relation to each other in a defined manner.

7. Method according to one of the preceding claims, wherein the technologically diversified sensor devices comprise fuzzy logic, and/or non-deterministic systems and/or non-deterministic algorithms, and/or sporadically faulty systems.

8. Use of a method according to one of the preceding claims during automated parking and/or in an urban environment.

9. System (100) for operating a vehicle (300), comprising:
- at least two technologically diversified sensor devices for capturing environmental information relating to the vehicle (300);
- an evaluation device (20, 30, 40, 50) for evaluating the environmental information captured by the technologically diversified sensor devices in a defined manner with regard to plausibility, wherein
- data from the sensor devices (S1...Sn) are fed to a first logic device (20) and fed to a second logic device (30), and wherein
- the data are fed from the first logic device (20) to a first diagnostic device (40) which is functionally connected to a first comparison device (50), wherein the data are checked for plausibility by means of the diagnostic device (40), and
- data from the sensor devices (S1...Sn) are checked for plausibility by means of a second logic device (30), a second diagnostic device (41) and a second comparison device (51), wherein
- the first comparison device (50) is functionally connected to the second comparison device (51), and wherein the first comparison device (50) carries out a cross-comparison with the second comparison device (51),
- and a decision device (60, 61) for using the environmental information in a defined manner using a result of the defined evaluation of the captured environmental information, wherein a selection with regard to checking the data for correctness is carried out by means of the logic devices (20, 30), the diagnostic devices (40, 41) and the comparison devices (50, 51) such that a redundant 2-out-of-4-voter is implemented, wherein defined conditions, diagnoses, integrities and states are used as the input for the voter configuration.

10. Computer program product comprising program code means, configured to carry out the method according to one of Claims 1 to 7 when it runs on a system (100) for operating a vehicle or is stored on a computer-readable data carrier.

## Revendications

1. Procédé pour faire fonctionner un véhicule (300), dans lequel un dispositif de détection (S1...Sn) présente au moins deux dispositifs de détection technologiquement diversifiés, présentant les étapes suivantes :
- détecter des informations d'environnement au moyen du dispositif de détection (S1...Sn) ;
- évaluer de manière définie les informations d'environnement détectées par les dispositifs de détection technologiquement diversifiés en ce qui concerne la plausibilité, dans lequel
- les données des dispositifs de détection (S1...Sn) sont fournies à un premier dispositif logique (20) et sont fournies à un deuxième dispositif logique (30), et dans lequel
- les données sont fournies par le premier dispositif logique (20) à un premier dispositif de diagnostic (40) qui est relié fonctionnellement à un premier dispositif de comparaison (50), la plausibilité des données étant vérifiée au moyen du dispositif de diagnostic (40), et
- la plausibilité des données des dispositifs de détection (S1...Sn) est vérifiée au moyen d'un deuxième dispositif logique (30), d'un deuxième dispositif de diagnostic (41) et d'un deuxième dispositif de comparaison (51)
- le premier dispositif de comparaison (50) est fonctionnellement relié au deuxième dispositif de comparaison (51), et le premier dispositif de comparaison (50) effectue une comparaison croisée avec le deuxième dispositif de comparaison (51),
- ; et
- utiliser de manière définie les informations d'environnement à l'aide d'un résultat de l'évaluation définie des informations d'environnement détectées, une sélection en fonction de la vérification de l'exactitude des données étant effectuée au moyen des dispositifs logiques (20, 30), des dispositifs de diagnostic (40, 41) et des dispositifs de comparaison (50, 51), de telle sorte qu'un vote redondant de 2 parmi 4 soit réalisé, des conditions, des diagnostics, des intégrités et des états définis étant utilisés comme entrée pour la configuration du vote.

2. Procédé selon la revendication 1, dans lequel un espace de conduite du véhicule (300) est détecté et évalué au moyen du dispositif de détection (S1...Sn).

3. Procédé selon la revendication 1 ou 2, dans lequel un contrôle de plausibilité d'une présence d'un objet dans un environnement du véhicule (300) est effectué.

4. Procédé selon l'une des revendications 1 à 3, **caractérisé en ce que** l'évaluation définie des dispositifs de détection technologiquement diversifiés est effectuée de manière redondante.

5. Procédé selon la revendication 4, dans lequel l'espace de conduite est divisé virtuellement d'un point de vue géométrique pour l'évaluation définie des dispositifs de détection technologiquement diversifiés.

6. Procédé selon l'une des revendications précédentes, dans lequel, lors de l'évaluation définie des informations d'environnement détectées par les dispositifs de détection technologiquement diversifiés, des algorithmes d'évaluation sont traités de manière définie les uns par rapport aux autres en ce qui concerne la plausibilité.

7. Procédé selon l'une des revendications précédentes, dans lequel les dispositifs de détection technologiquement diversifiés comprennent une logique floue et/ou des systèmes non déterministes et/ou des algorithmes non déterministes et/ou des systèmes défectueux sporadiquement.

8. Utilisation d'un procédé selon l'une des revendications précédentes lors du stationnement automatisé et/ou en milieu urbain.

9. Système (100) pour faire fonctionner un véhicule (300), comprenant :
- au moins deux capteurs technologiquement diversifiés pour détecter des informations d'environnement du véhicule (300);
- un dispositif d'évaluation (20, 30, 40, 50) pour évaluer de manière définie la plausibilité des informations d'environnement détectées par les dispositifs de détection technologiquement diversifiés, dans lequel
- les données des dispositifs de détection (S1...Sn) sont fournies à un premier dispositif logique (20) et sont fournies à un deuxième dispositif logique (30), et dans lequel
- les données sont fournies par le premier dispositif logique (20) à un premier dispositif de diagnostic (40) qui est relié fonctionnellement à un premier dispositif de comparaison (50), la plausibilité des données étant vérifiée au moyen du dispositif de diagnostic (40), et
- la plausibilité des données des dispositifs de détection (S1...Sn) est vérifiée au moyen d'un deuxième dispositif logique (30), d'un deuxième dispositif de diagnostic (41) et d'un deuxième dispositif de comparaison (51)
- le premier dispositif de comparaison (50) est fonctionnellement relié au deuxième dispositif de comparaison (51), et le premier dispositif de comparaison (50) effectue une comparaison croisée avec le deuxième dispositif de comparaison (51),
- et un dispositif de décision (60, 61) pour utiliser de manière définie les informations d'environnement à l'aide d'un résultat de l'évaluation définie des informations d'environnement détectées, une sélection en fonction de l'exactitude des données étant effectuée au moyen des dispositifs logiques (20, 30), des dispositifs de diagnostic (40, 41) et des dispositifs de comparaison (50, 51), de telle sorte qu'un vote redondant de 2 parmi 4 soit réalisé, des conditions, des diagnostics, des intégrités et des états définis étant utilisés comme entrée pour la configuration du vote.

10. Programme informatique comprenant des moyens de code programme conçus pour mettre en œuvre le procédé selon l'une des revendications 1 à 7 lorsqu'il est exécuté sur un système (100) pour faire fonctionner un véhicule ou est stocké sur un support de données lisible par ordinateur.
